**Europäisches Patentamt**

**European Patent Office**

**Office européen des brevets**

(19)

(11) Veröffentlichungsnummer : **0 518 403 A1**

## (12) EUROPÄISCHE PATENTANMELDUNG

(21) Anmeldenummer : **92201426.1**

(22) Anmeldetag : **09.05.92**

(51) Int. Cl.$^5$ : **B05B 15/04,** B05C 21/00

(30) Priorität : **18.05.91 DE 9106206 U**
**19.07.91 DE 4123964**

(43) Veröffentlichungstag der Anmeldung :
**16.12.92 Patentblatt 92/51**

(84) Benannte Vertragsstaaten :
**PT**

(71) Anmelder : **Ribic, Harald, Jun.**
**Planetenfeldstrasse 103a**
**W-4600 Dortmund 70 (DE)**

(72) Erfinder : **Ribic, Harald, Jun.**
**Planetenfeldstrasse 103a**
**W-4600 Dortmund 70 (DE)**

(74) Vertreter : **Meinke, Julius, Dipl.-Ing.**
**Patentanwälte Meinke und Dabringhaus**
**Westenhellweg 67**
**W-4600 Dortmund 1 (DE)**

(54) **Abklebeprofil zum Einsatz bei Lackierarbeiten von Fahrzeugkarrosserien.**

(57) Mit einem Abklebeprofil zum Einsatz bei Lackierarbeiten am Übergangsbereich von in Profilen eingebetteten Scheiben von Kraftfahrzeugen zur Kraftfahrzeugkarrosserie, soll eine Lösung geschaffen werden, mit der die Scheibenprofile von Kraftfahrzeugscheiben in einfacher Weise für Lackierarbeiten abgeklebt werden können.

Dies wird dadurch erreicht, daß das Profil (5) mit zwei zueinander im Winkel stehenden Profilschenkeln (51,52) mit einer Klebebeschichtung (6) auf wenigstens einer Profilfläche ausgebildet ist

— mit einem kürzeren L-Schenkel (52) zum Hintergreifen der an dem zu lackierenden Karosseriebereich (1) anliegenden Lippe (2a) des die Fahrzeugscheibe (3) einfassenden Profiles (2)

— und mit einem längeren L-Schenkel (51) zum Verkleben auf der Außenoberfläche der Scheibe (3) und/oder auf Karosserieflächen.

FIG.2

EP 0 518 403 A1

Die Erfindung richtet sich auf ein Abklebeprofil zum Einsatz bei Lackierarbeiten am Übergangsbereich von in Profilen eingebetteten Scheiben von Kraftfahrzeugen zur Kraftfahrzeugkarrosserie.

Bei Lackierarbeiten von Kraftfahrzeugen müssen nicht zu lackierende Bereiche, insbesondere Dichtprofile, die Übergangsprofile zwischen Karrosserie und eingesetzten Scheiben u. dgl. abgeklebt werden, um sie vor der Benetzung mit Farbe zu schützen. Zum Schutz von Reifen, etwa bei Lackierarbeiten von Felgen, sind Lackierschablonen beispielsweise aus der US-2 954 752 oder dem DE-85 13 902-U bekannt. Eine abnehmbare, eine Scheibe schützende Maske als großflächiges Element zeigt die US-4 915 058, während eine Abdeckmaske für einen Schriftzug, der nicht mit Farbe versehen werden soll, aus der US-2 959 152 bekannt ist. Eine mit einer umlaufenden Kante versehene flächige Schutzschablone für in Gummiprofilen eingebetteten Scheiben zeigt die US-2 922 392.

Bei modernen Fahrzeugen ist es üblich, gerade Front- und Heckscheiben in vergleichsweise eigensteifen Profilen unmittelbar mit der Karrosserie zu verkleben. Um hier Lackierarbeiten vorzunehmen, müssen die Übergangsbereiche zwischen Karrosserie und Scheibendichtrahmen abgeklebt werden, was mit üblichen Abklebprofilen etwa nach der DE-27 46 502-A aufwendig und zum Teil nicht möglich ist, da Bereiche des Scheibenprofiles hintergriffen und von Karrosserieflächen zum Lackieren abgehoben werden müssen.

Aufgabe der Erfindung ist daher die Schaffung einer Lösung, mit der die Scheibenprofile von Kraftfahrzeugscheiben in einfacher Weise für Lackierarbeiten abgeklebt werden können.

Mit einem Abklebeprofil der eingangs bezeichneten Art wird diese Aufgabe gemäß der Erfindung dadurch gelöst, daß das Profil mit zwei zueinander im Winkel stehenden Profilschenkeln mit einer Klebebeschichtung auf wenigstens einer Profilfläche ausgebildet ist

- mit einem kürzeren L-Schenkel zum Hintergreifen der an dem zu lackierenden Karrosseriebereich anliegenden Lippe des die Fahrzeugscheibe einfassenden Profiles
- und mit einem längeren L-Schenkel zum Verkleben auf der Außenoberfläche der Scheibe und-/oder Karrosserieflächen.

Mit dem erfindungsgemäßen Abklebeprofil ist es möglich, hinter die Dichtlippen an den Scheibenprofilen zu greifen und diese von der zu lackierenden Karrosseriefläche abzuheben und in der abgehobenen Stellung zu fixieren, die auftretenden Kräfte können durch die Verklebung über einen längeren Schenkel aufgebracht werden.

Für allgemeine Lackier- oder Malarbeiten sind teilgewinkelte oder abwinkelbare Profile bekannt, so beispielsweise aus der US-4 398 495 oder der US-4 263 355, die aber für das Einsatzgebiet der vorliegenden Erfindung nicht geeignet sind. Die kleine Bruch- oder Knickkante beim Profil nach der US-4 263 335 vermag die bei Kraftfahrzeugscheibenprofilen auftretenden Rückstellkräfte nicht aufzufangen, hier ist eine vergleichsweise steife Winkelausbildung gemäß der Erfindung in jedem Falle notwendig.

In Ausgestaltung ist nach der Erfindung vorgesehen, daß Bereiche des zur Verklebung dienenden L-Schenkels entfernt sind, was den Vorteil hat, daß das Profil trotz seiner gewünschten Eigensteifigkeit auch um Ecken herum zur Verklebung eingesetzt werden kann.

Um die Handhabung zu erleichtern, ist erfindungsgemäß vorgesehen, daß wenigstens der zum Hintergreifen der Profildichtlippen eingesetzte L-Schenkel an seinem Ende sich verjüngend ausgebildet ist, wobei auch in Ausgestaltung vorgesehen sein kann, daß die Schenkel, ausgehend von der Winkelecke, sich zu den freien Enden hin verjüngend ausgebildet sind.

Um die auftretenden Kräfte optimal auffangen zu können, ist erfindungsgemäß vorgesehen, daß der mit der Klebstoffbeschichtung versehene Schenkel wenigstens 1,2-fach, insbesondere mehr als 3-fach breiter ausgebildet ist als der Schenkel.

Statt einer grundsätzlichen Ausnehmung von Teilen der Klebefläche kann auch alternativ oder in Kombination vorgesehen sein, daß wenigstens Teile der Schenkelflächen geschlitzt und/oder mit Kerben versehen ausgebildet sind.

Um die Handhabung noch weitergehend zu vereinfachen, kann erfindungsgemäß auch vorgesehen sein, daß es zur Ermöglichung des seitlichen Einschiebens unter Bereiche der Scheibenprofile aus einzelnen, wenigstens bereichsweise eigensteifen Kurzelementen gebildet ist.

In der Praxis können solche Elemente beispielsweise 20 cm lang sein, sie können seitlich von den Eckbereichen aus unter die Scheibenprofile nacheinander geschoben werden und bilden im Endabklebebereich dann ein dichtes umlaufendes Abklebeprofil. Die Kurzelemente können dem Verbraucher in Bündeln zur Verfügung gestellt werden, so daß die Handhabung wenigstens so leicht ist, als sei das Profil etwa auf einer Rolle oder als Band, wie im Stand der Technik bekannt, aufgewickelt.

Die Erfindung ist nachstehend anhand der Zeichnung beispielsweise näher erläutert. Diese zeigt in

Fig. 1 einen Querschnitt durch den Übergangsbereich zwischen einer eingeklebten Scheibe und der Karrosserie mit noch nicht eingestecktem Abklebeprofil,

Fig. 2 den gleichen Querschnitt mit dem Abklebeprofil in der Gebrauchslage,

Fig. 3 die räumliche Darstellung eines insbesondere für Ecken einzusetzenden Abklebeprofiles,

Fig. 4 bis 6 unterschiedliche Querschnittsformen des Abklebeprofiles,

Fig. 7 eine Aufsicht auf einen der Profilschenkel des Abklebeprofiles mit unterschiedlich gestalteten Ausnehmungen sowie in

Fig. 8 die vereinfachte räumliche Aufsicht auf einen Eckbereich eines abgeklebten Scheibenprofiles.

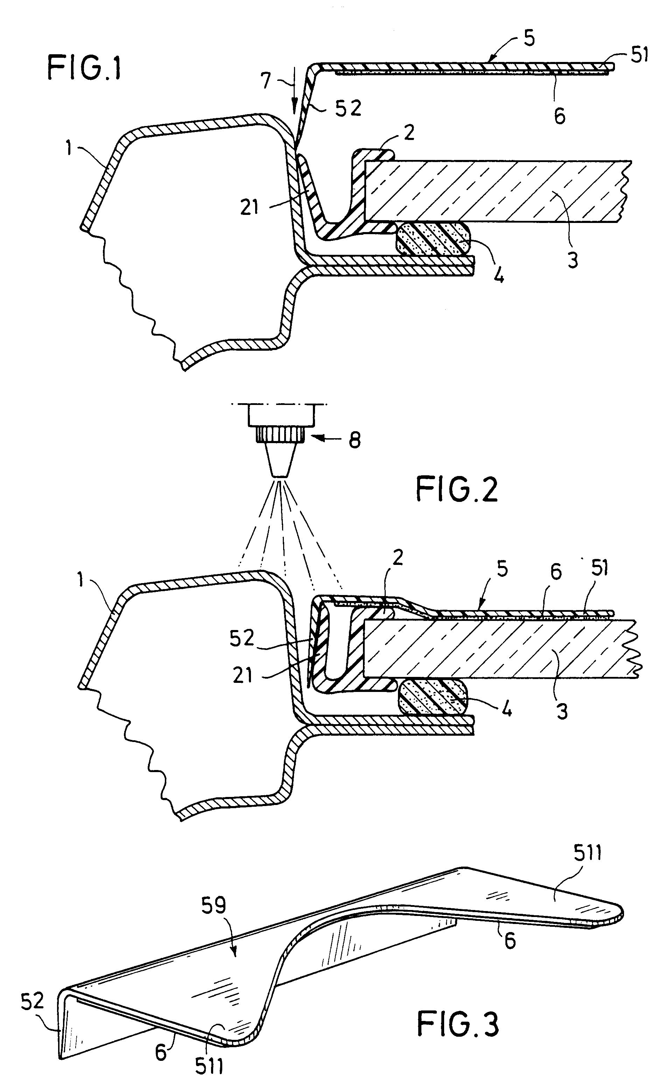

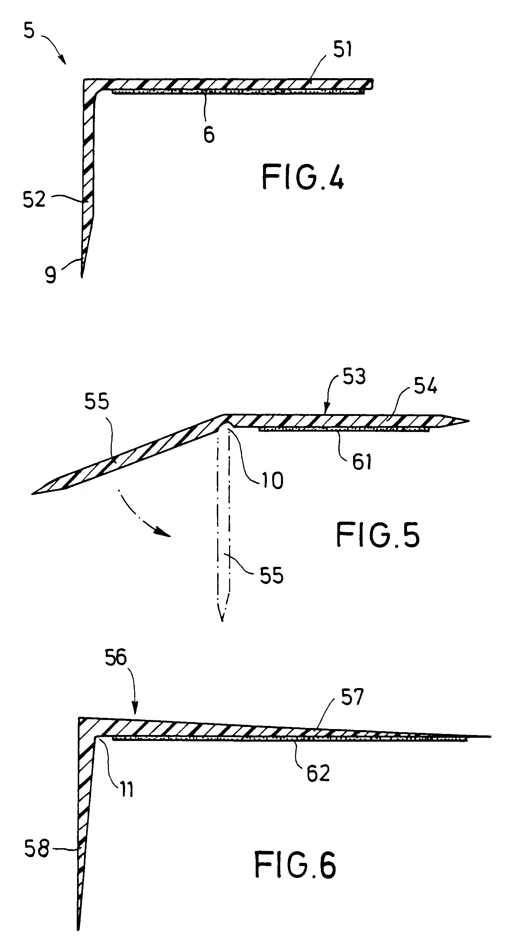

Um einen mit 1 bezeichneten Karosseriebereich lackieren zu können, der mit einem Dichtrahmen 2 für eine mit einem Klebeprofil 4 verklebte Windschutzscheibe 3 versehen ist, wird ein allgemein mit 5 bezeichnetes Abklebeprofil nach der Erfindung in Richtung des Pfeiles 7 (Fig. 1) hinter die mit 21 bezeichnete Lippe des Dichtrahmens 2 eingesteckt. Das Abklebeprofil 5 ist hier querschnittlich L-förmig ausgebildet mit einem Profilschenkel 51, der auf seiner Innenseite mit einer Klebstoffbeschichtung 6 versehen ist, und einem L-Schenkel 52, dessen vorderer Bereich 9 (Fig. 4) zur Bildung einer Spitze verjüngt ausgebildet ist.

Mit diesem vorderen Bereich 9 wird das Profil hinter die Lippe 21 eingeschoben und seitlich geringfügig versetzt auf das Windschutzscheibenprofil 2 aufgeklebt, derart, daß sich die Lippe 21 geringfügig vom Blech abhebt, wie dies in Fig. 2 dargestellt ist. Nunmehr kann mit dem Sprühkopf 8, der in Fig. 2 andeutungsweise wiedergegeben ist, der Lack aufgesprüht werden. Durch das Abdeckprofil 5 ist es möglich, daß Lacknebel an den mit 1a bezeichneten Karosseriebereich kommt, der in der Gebrauchslage von der Lippe 21 des Profiles 2 überdeckt wird.

Wird nach Beendigung der Lackierarbeiten das Profil 5 abgezogen, legt sich die Lippe 21 über die sich gebildete Kante des Lackes, so daß das Lackierungsergebnis immer sauber und gratfrei ist.

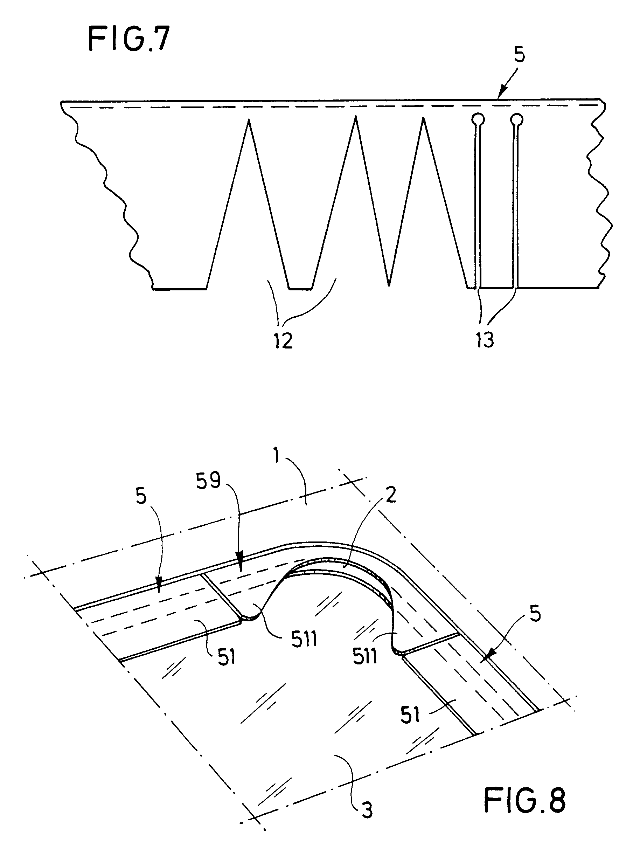

Um insbesondere die Ecken der Dichtrahmen an den Scheiben von den Karosseriebereichen abheben zu können, besteht eine für die Erfindung besonders zweckmäßige Gestaltung in einem Kurzprofil 59, wie es in Fig. 3 dargestellt ist. Dieses Kurzprofil 59 ist vergleichsweise eigensteif ausgebildet und weist, wie oben schon beschrieben, einen Profilschenkel 52 zum Hintergreifen der Dichtlippe 21 am Profilrahmen 2 auf und zwei Profillappen 511, die durch eine größere Innenaussparung gebildet sind, wie sich dies aus Fig. 3 und auch aus Fig. 8 ergibt. Damit ist es möglich, das Abklebeprofil 59 um die Ecke eines Dichtrahmens 2 herumzuführen.

Zweckmäßig sind die Abklebeprofile 5 als Kurzstücke ausgebildet, derart, daß sie seitlich hinter die Dichtlippe 21 des Dichtrahmens 2 eingeschoben werden können, was die Montage der Abklebeprofile 5 stark vereinfacht, diese Kurzstücke sind mit Ausnahme der Fig. 3 ansonsten in den Figuren nicht näher dargestellt.

Abweichend zu dem in Fig. 4 dargestellten, bereits werkseitig in die endgültige Form gebrachten L-Profil zeigt Fig. 5 ein Profil 53 als Flachprofil, was im dargestellten Beispiel bereits werkseitig geringfügig vorgeknickt ist. Dieses Flachprofil 53 mit seinen beiden Schenkeln 54 und 55 weist eine Knickprägung 11 im Bereich der späteren Winkelecke auf, die es ermöglicht, den Schenkel 55 relativ zum Schenkel 54 in die gestrichelte Position zu verschwenken, was in Fig. 5 mit einem Pfeil 13 angedeutet ist.

Um die Handhabung ggf. zu erleichtern, kann das Profil auch in der in Fig. 6 wiedergegebenen Weise gestaltet sein. Dort ist der mit der Klebebeschichtung 62 versehene Schenkel 57 etwa doppelt so lang ausgebildet, wie der klebstoffbeschichtungsfreie Schenkel 58.

In Fig. 6 ist auch dargestellt, daß die Schenkel 57 bzw. 58, ausgehend von der Winkelecke, sich gleichmäßig verjüngend ausgebildet sein können. Dies ist insbesondere zweckmäßig, um Material einzusparen und um ggf. die Wickelbarkeit auf Rollen dadurch zu erleichtern, daß neben der Streifenecke 12 die Restbereiche des Profiles, insbesondere desjenigen mit Klebstoffbeschichtung, vergleichsweise flexibel ausgebildet sind.

Eine andere als die oben bereits beschriebene Art leichter Krümmungen und Kurven mit dem Profil 5 überdecken zu können, besteht darin, Kerben 12 oder Schlitze 13 in wenigstens einen Schenkel einzubringen, wie dies in Fig. 7 dargestellt ist. Diese Kerben 12 bzw. Schlitze 13 können bereits werkseitig vorgesehen sein. Eine Möglichkeit nach der Erfindung besteht aber auch darin, dem Benutzer ein hierzu eigens angepafftes Werkzeug zur Verfügung zu stellen, derart, daß er die Schlitze bzw. Kerben unmittelbar während des Abklebevorganges an den Stellen einbringen kann, an denen er sie benötigt.

Natürlich sind die beschriebenen Ausführungsbeispiele der Erfindung noch in vielfacher Hinsicht abzuändern, ohne den Grundgedanken zu verlassen. So kann beispielsweise der nicht mit einer Klebstoffbeschichtung versehene Schenkel auch in bezug auf die Innenwinkelecke 12 in einem spitzen Winkel auf den anderen Schenkel 51 weisend gestaltet sein. Im extremsten Falle können in der Verpackung in der Transport- und Verpackungslage die Schenkel 51 und 52 flach aufeinanderliegen, sie werden dann vom Benutzer etwa in Richtung der L-Form aufgebogen, wobei die Winkelecke dann werkseitig so gestaltet sein kann, etwa durch entsprechende Materialanhäufung, daß ein bestimmter gewünschter Winkel, der im Extremfalle dem rechten Winkel entsprechen kann, nicht überschritten wird.

**Patentansprüche**

1. Abklebeprofil zum Einsatz bei Lackierarbeiten am Übergangsbereich von in Profilen eingebetteten Scheiben von Kraftfahrzeugen zur Kraftfahrzeugkarrosserie,

dadurch gekennzeichnet,
daß das Profil (5) mit zwei zueinander im Winkel stehenden Profilschenkeln (51,52) mit einer Klebebeschichtung (6) auf wenigstens einer Profilfläche ausgebildet ist

- mit einem kürzeren L-Schenkel (52) zum Hintergreifen der an dem zu lackierenden Karrosseriebereich (1) anliegenden Lippe (2a) des die Fahrzeugscheibe (3) einfassenden Profiles (2)
- und mit einem längeren L-Schenkel (51) zum Verkleben auf der Außenoberfläche der Scheibe (3) und/oder auf Karrosserieflächen.

2. Abklebeprofil nach Anspruch 1,
dadurch gekennzeichnet,
daß Bereiche des zur Verklebung dienenden L-Schenkels (51) entfernt sind.

3. Abklebeprofil nach Anspruch 1 oder 2,
dadurch gekennzeichnet,
daß wenigstens der zum Hintergreifen der Profildichtlippen eingesetzte L-Schenkel (52) an seinem Ende (9) sich verjüngend ausgebildet ist.

4. Abklebeprofil nach einem der vorangehenden Ansprüche,
dadurch gekennzeichnet,
daß die Schenkel (57,58), ausgehend von der Winkelecke (12), sich zu den freien Enden hin verjüngend ausgebildet sind.

5. Abklebeprofil nach einem der vorangehenden Ansprüche,
dadurch gekennzeichnet,
daß der mit der Klebstoffbeschichtung (6″) versehene Schenkel (57) wenigstens 1,2-fach, insbesondere mehr als 3-fach breiter ausgebildet ist als der Schenkel (52).

6. Abklebeprofil nach einem der vorangehenden Ansprüche,
dadurch gekennzeichnet,
daß wenigstens Teile der Schenkelflächen geschlitzt und/oder mit Kerben (9 bzw. 10) versehen ausgebildet sind.

7. Abklebeprofil nach einem der vorangehenden Ansprüche,
dadurch gekennzeichnet,
daß es zur Ermöglichung des seitlichen Einschiebens unter Bereiche der Scheibenprofile aus einzelnen, wenigstens bereichsweise eigensteifen Kurzelementen gebildet ist.

FIG.1

FIG.2

FIG.3

FIG.4

FIG.5

FIG.6

FIG.7

5

12

13

5

59

1

2

51

511

511

5

51

3

FIG.8

**Europäisches Patentamt**

**EUROPÄISCHER RECHERCHENBERICHT**

Nummer der Anmeldung

EP    92 20 1426

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-2 922 392 (MUND)<br>* das ganze Dokument *<br>--- | 1 | B05B15/04<br>B05C21/00 |
| A | DE-U-8 513 902 (KRESS)<br>* Seite 4, Zeile 19 - Zeile 29 *<br>--- | 1 | |
| A | US-A-4 263 355 (SARKISIAN)<br>* das ganze Dokument *<br>--- | 1,5 | |
| A | DE-A-2 746 502 (UEMURO)<br>* Seite 4, Zeile 26 - Zeile 32;<br>Abbildungen 2A,2B *<br>--- | 2,6 | |
| A | US-A-2 959 152 (BYERS)<br>* Spalte 2, Zeile 22 - Zeile 24 *<br>* Spalte 2, Zeile 42 - Zeile 46 *<br><br>----- | 4 | |

|   |
|---|
| **RECHERCHIERTE SACHGEBIETE (Int. Cl.5 )**<br><br>B05C<br>B05B<br>B05D<br>B60J |

Der vorliegende Recherchenbericht wurde für alle Patentansprüche erstellt

| Recherchenort | Abschlußdatum der Recherche | Prüfer |
|---|---|---|
| DEN HAAG | 14 OKTOBER 1992 | JUGUET J.M. |